# EUROPEAN PATENT APPLICATION

(11) **EP 1 202 437 A2**
(43) Date of publication of application: **02.05.2002**
(21) Application number: 01309041.0
(22) Date of filing: 24.10.2001
(51) Int. Cl.: H02K 7/00, H02K 5/08

(54) **Double insulated motor armature**

(30) Priority: 31.10.2000 GB 0026514
(71) Applicant: JOHNSON ELECTRIC S.A., 2300 La Chaux-de-Fonds (CH)
(72) Inventor: Tang, Ernest, Tai Po, N.T. Hong Kong (HK)
(74) Representative: Higgins, Michael Roger

(57) **Abstract**

An armature for a double insulated electric motor has a shaft 12 made from two shaft portions 14, 16 axially aligned and separated by a small gap and joined together by an overmoulded insulator 18 thus eliminating the insulation layer between the armature core and the shaft of a conventional double insulated armature.

## Description

### Background

This invention relates to electric motors and in particular, to an armature for a small sized double insulated electric motor. The term double insulated electric motor refers to an electric motor having basic insulation and supplementary insulation, with the two insulations being physically separated as required for example, by Underwriters Laboratories Inc. regulation UL 1097.

Basically, in an electric motor with a wound rotor, the double insulation requirement means that the wire of the armature windings (which is itself insulated) must be insulated from the armature core by a primary or basic insulation layer. This is achieved by the use of slot liners which also protect the insulation on the wire from being scratched or otherwise damaged during assembly, transportation and use. A secondary or supplementary insulation insulates the armature core from the shaft. The shaft, which is exposed, is thus doubly insulated from the winding.

The insulation between the shaft and the armature core is provided in the prior art in one of two ways. The insulation can be insert moulded, requiring the armature core and the shaft to be placed in a mould and the space between is filled with insulating material in an injection moulding machine. This provides a good result but is very expensive and small changes in the armature design such as stack length or stack location on the shaft requires a new mould.

The second method requires a sleeve of insulating material to be pressed onto the shaft and the armature core to be pressed onto the sleeve. This gives greater flexibility to accommodate small design changes but the strength of the connection between the core and the shaft is compromised as there are two metal to plastic interfaces.

It is also known from DD 128644 and FR 2588428 to join two shaft portions by press-fitting the two portions together using a preformed intermediate insulating member. However, such arrangements are difficult to produce with good spillage control and good co-axial alignment of the two shaft portions.

Accordingly, there is a need for a double insulated armature which is tolerant of design changes, gives superior core to shaft connection strength, is simple to implement and is relatively inexpensive.

### Summary of the Invention

It has been found that these needs are satisfied by an armature assembly in which the shaft is formed in two parts joined together by the supplemental insulation. This arrangement is simple to achieve, allows full strength of metal to metal connection between the core and the shaft and is very tolerant of small design changes to the armature such as stack size, shaft length and axial location of the core on the shaft.

Accordingly, in one aspect thereof, the present invention provides an armature assembly for a small double insulated electric motor, comprising: a shaft; an armature core mounted on the shaft: a commutator fitted to the shaft adjacent one end of the core; windings wound around poles of the core and terminated on the commutator; and basic insulation separating the windings from the core; wherein the shaft has a core portion on which the core is mounted and an output portion axially aligned with and separated by a small gap from the core portion, the core portion and the output portion being joined together by an insulator forming a supplemental insulation between the output portion and the core.

Preferably, the ends of the shaft portions are keyed to the insulator.

Preferably, the insulator has an outer surface adapted to receive a fan.

Preferably, the insulator has a radially extending collar for axially locating the fan.

Preferably, a fan is integrally formed with the insulator.

Preferably, the insulator is adapted to function as a thrust surface.

Preferably, the insulator forms a stop for axially locating the armature core on the shaft.

According to a second aspect, the present invention provides a method of assembling a double insulated armature for an electric motor, the armature having a two part shaft joined together by an insulator, a wound armature core and a commutator, the method comprising the steps of placing the two parts of the shaft in a plastic injection moulding machine, holding the two parts in axial alignment and maintaining an axial separation between adjacent first ends of each part of the shaft while overmoulding the first ends with an insulator so that the insulator joins the two parts together and in axial alignment.

### Brief Description of the Drawings

Preferred embodiments of the invention will now be described, by way of example only, in which:
Figure 1 is schematic diagram of a wound armature according to the preferred embodiment;
Figure 2 is a part sectional view of a part of Figure 1 showing a modified insulator;
Figure 3 is a view similar to Figure 2 of another variation;
Figure 4 is a view similar to Figure 3 of yet another variation; and
Figure 5 is a view similar to Figure 2 showing a modified insulator with a fan.

### Description of the Preferred Embodiment

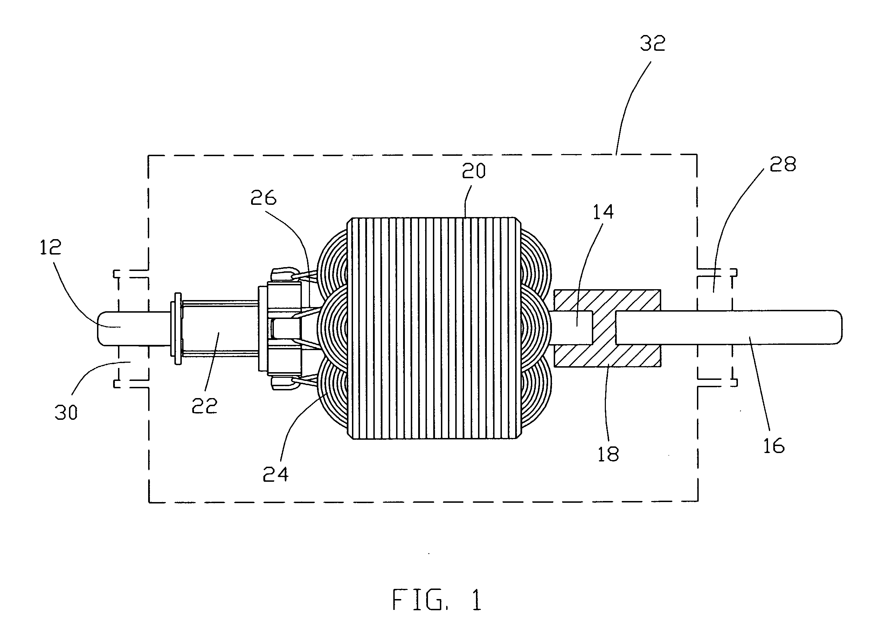

Figure 1 shows, in schematic form, a wound armature for an electric motor, such as a permanent magnet DC motor or a universal motor. The armature has a shaft 12, an armature core 20 mounted on the shaft and a commutator 22 mounted on the shaft 12 adjacent one end of the core 20. Armature windings 24 are wound about poles of the core 20 and are terminated on segments of the commutator 22 in the usual manner. The windings 24 are formed from insulated copper wire. Between the core 20 and the copper wire is a layer of insulation, commonly referred to as slot liners as it lines the slots formed between the poles of the core. This insulation also covers the axial end faces of the core and forms the basic insulation of a double insulation system. The commutator 22 has a number of conducting segments connected to the windings 24. The segments are supported on a base of insulating material which insulates the segments from the shaft 12. A spacer 26 of insulating material covers the shaft 12 between the commutator 22 and the core 20.

The shaft 12 has two metal shaft portions, a core portion 14 and an output portion 16, connected together by an insulator 18. The two shaft portions and the insulator are axially aligned to form a single shaft. To form the shaft, the two portions are aligned in an injection moulding machine with a small gap between the adjacent ends and the insulator is moulded about the adjacent ends of both portions filling the gap therebetween and joining the two portions together. In the preferred embodiment, the material of the insulator is glass filled nylon such as ZYTEL 101 by DuPont.

The core 20 and commutator 22 can then be pressed onto the shaft 12 in the conventional manner for a standard armature and then wound. Indeed, although not shown, the core can be pressed against the insulator so that the insulator acts as a spacer for the core and as a shaft insulator for the windings. In addition, the insulator can be adapted to provide a thrust surface against which the bearing presses either directly or preferably, via one or more thrust washers.

Alternatively, the rotor core could be fitted to the core portion of the shaft before the core portion and the output portion are joined together, though this is not preferred.

When assembled, the motor supports the armature through two bearings 28, 30 shown in phantom in Figure 1. The bearing 28 fitted to the output portion 16 of the shaft may be in direct contact with the motor housing 32 or stator as the insulator insulates it from the core 20. The core shaft portion 14 is not insulated from the core 20 and therefore, the bearing 30 fitted to the core portion 14 of the shaft should be insulated from the stator or motor housing 32, preferably by way of a plastics material bearing bracket or end cap arrangement.

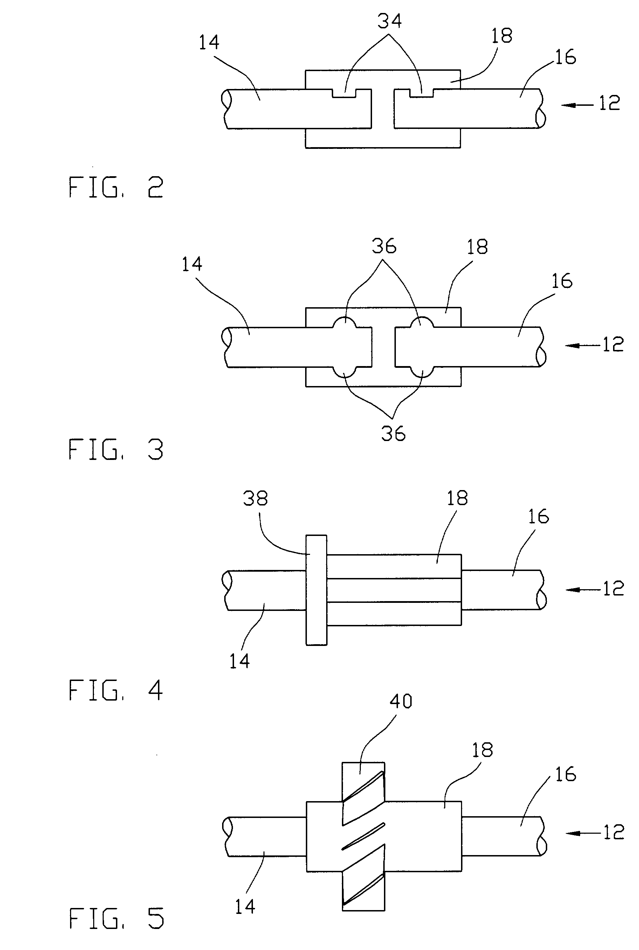

As the insulator 18 transmits the power and torque from the core portion 14 to the output portion 16, the connection between the insulator 18 and each shaft portion 14, 16 should be strong enough to withstand the maximum torque produced by the motor without allowing relative rotation between the portions 14, 16, i.e., slippage. For low power motors, adhesion between the insulator 18 and the shaft portions 14, 16 may be sufficient. For higher power motors, special end of shaft features may be employed to increase the maximum torque transmitted. For example, as shown in Figure 2, the ends of the shaft portions may have slots 34 to form keys. In Figure 3, the ends have been stamped to form wings 36. Alternatively, knurling, gearing, splines, flats and similar arrangements may be used to prevent slippage.

In addition to joining the two shaft portions 14, 16 together, the insulation could be used to form a mount for a fan as shown in Figure 4. In such a case, the surface of the insulator 18 may be adapted to receive the fan and thus may be square or some other regular sided configuration to simplify assembly and ensure rotating capture of the fan. Indeed, the outer surface of the insulator could be adapted to snap fit a fan. The insulator of Figure 4 has a collar 38 which forms a stop against which the fan is pressed to axially locate the fan. The body of the insulator 18 is shown as an octagonal cylinder.

If winding and cooling requirements allow, a fan 40 could be integrally molded with the insulator 18 as shown in Figure 5, therefore saving on fan assembly and separate forming costs.

By joining together the output portion and core portion of the shaft by an overmoulding process, the two shaft portions can be quickly and accurately aligned giving a big advantage over pressed together portions using preformed parts.

While the preferred embodiment has been described to illustrate the invention, various modifications and variations will be apparent to those skilled in the art and it is intended to cover all such variations that fall within the scope of the following claims.

## Claims

1. An armature for a double insulated electric motor, comprising:
a shaft (12) having a core portion (14) and a separate output portion (16);
an armature core (20) mounted on the shaft (12);
a commutator (22) fitted to the shaft (12) adjacent one end of the core (20);
windings (24) wound around poles of the core (20) and terminated on the commutator (22);
basic insulation separating the windings (24) from the core (20), and an insulator (18) separating the core portion (14) and output portion (16) of the shaft and forming a supplemental insulation between the output portion (16) of the shaft and the core (20),
**characterised in that**
the insulator (18) is an overmoulded part, moulded to and joining together the core portion (14) and the output portion (16) of the shaft (12).

2. An armature according to Claim 1, wherein the ends of the shaft portions (14, 16) are keyed to the insulator (18).

3. An armature according to Claim 2 wherein, the shaft portions (14, 16) are keyed using a feature selected from the group consisting of wings, flats, slots, gears, knurls and splines.

4. An armature according to any one of the preceding claims wherein, the insulator (18) has an outer surface adapted to receive a fan.

5. An armature according to Claim 4 wherein, the insulator (18) has a radially extending collar (38) for axially locating the fan.

6. An armature according to any one of Claims 1 to 3 wherein, a fan (40) is integrally formed with the insulator (18).

7. An armature according to any one of the preceding claims wherein, the insulator (18) is adapted to function as a thrust surface.

8. An armature according to any one of the preceding claims wherein, the insulator (18) forms a stop for axially locating the armature core (20) on the shaft (12).

9. A method of assembling a double insulated armature for an electric motor, the armature having a two part shaft (12) joined together by an insulator (18), a wound armature core (20) and a commutator (22), the method comprising the steps of:
placing the two parts (14, 16) of the shaft (12) in a plastic injection moulding machine,
holding the two parts (14, 16) in axial alignment and maintaining an axial separation between adjacent first ends of each part (14, 16) of the shaft (12) while overmoulding the first ends with an insulator (18) so that the insulator joins the two parts (14, 16) together in axial alignment.

10. A method according to Claim 9 wherein the armature core (20) and commutator (22) are fitted to the shaft (12) after the two parts (14, 16)of the shaft (12) have been joined together.

11. A method according to Claim 9 or 10 further comprising the step of forming on the first end of each part (14, 16)of the shaft (12), a key (34, 36) for keying the part (14, 16) to the insulator (18).

12. A method according to Claim 9, 10 or 11 wherein the step of forming the insulator (18) includes shaping the insulator (18) into the form of a fan (40) or spacer.
